**Europäisches Patentamt**

**European Patent Office**

**Office européen des brevets**

(11) Publication number: **0 077 667**
**A1**

(12) # EUROPEAN PATENT APPLICATION

(21) Application number: **82305518.1**

(22) Date of filing: **18.10.82**

(51) Int. Cl.³: **A 01 D 41/12**
**A 01 D 41/02**

(30) Priority: **21.10.81 GB 8131796**

(43) Date of publication of application:
**27.04.83 Bulletin 83/17**

(84) Designated Contracting States:
**DE FR IT**

(71) Applicant: **Tecalemit Electronics Limited**
**Longbridge Road**
**Plymouth Devon, PL6 8LA(GB)**

(72) Inventor: **LeFlufy, Michael John**
**35 West End Road**
**Silsoe Bedfordshire(GB)**

(72) Inventor: **Stone, Gordon Thomas**
**Weatheroak Station Road**
**Ampthill Bedfordshire(GB)**

(74) Representative: **Abbott, David John et al,**
**Abel & Imray Northumberland House 303-306 High**
**Holborn**
**London, WC1V 7LH(GB)**

(54) **Control apparatus for a combine harvester.**

(57) A control apparatus for a combine harvester is described which includes a microcomputer for correlating the rate of intake of the crop with the measured grain loss taking into consideration the transit time of the crop through the harvester, and on the basis of this relationship controls the ground speed of the harvester so that a predetermined grain loss is maintained. The crop intake rate is ascertained from the thickness of the mass of crop being fed into the harvester by the crop elevator at the front of the harvester. Other ways of ascertaining the crop intake rate may be employed. The grain loss is ascertained from the number of grains striking grain detectors in the path of the straw and chaff blown out of the rear of the harvester. The crop intake rate and the grain loss are averaged over short periods of time before correlation so as to enable the correlation to tolerate the dispersion of the crop in its passage through the harvester.

./...

EP 0 077 667 A1

FIG.2.

CONTROL APPARATUS FOR A COMBINE HARVESTER

This invention relates to control apparatus for a combine harvester.

In the harvesting of grain a number of factors must be taken into consideration to obtain the optimum yield. For example, if the harvester is taken through the grain at a relatively high speed the grain is gathered more quickly so that in periods of bad weather advantage can be taken of such spells of fine weather as there are and the cost of hiring of a combine harvester is lower. However, harvesting at a relatively high speed results in an increased loss of grain compared with the loss which would occur if harvesting were done at a lower speed. The driver of a combine harvester has many controls to operate and he is not always able to adjust the speed of the harvester to suit the density of the crop with the result that the crop intake rate can become excessively high and correspondingly high grain loss can result. In order to overcome this difficulty, it has been proposed to control the speed of the harvester in response to the crop intake rate so as to obtain a substantially constant crop intake rate. It has also been proposed to obtain a measure of the grain loss occurring by placing grain detectors in or close to the straw and chaff outlets of the harvester and on the basis of the number of grains detected to provide an indication of the actual grain loss occurring. Neither of these methods of optimizing the use of a combine harvester is very effective because the

0077667

crop intake rate is not directly proportional to the grain loss. Different crops have been found to provide different proportions of grain loss for a given crop intake rate and these differences can also occur with the same crop in different parts of a field. Comparing the speed of the harvester in response to the grain loss indication derived from the measured number of lost grains suffers from the disadvantage that any change in grain loss can only be measured after the grain has been threshed so that satisfactory control of the speed to prevent the change is impossible.

It is an object of the present invention to provide an improved combine harvester in which the speed of the harvester is controlled so as to maintain the grain loss at an acceptable level.

According to the present invention there is provided control apparatus for a combine harvester including means for producing an assessment of the crop intake rate, means for producing an assessment of the grain loss, means for deriving a relationship between grain loss and the crop intake rate, and means for controlling the ground speed of the harvester in response to the crop intake rate taking into consideration the derived relationship so that a predetermined grain loss is maintained. An indication of the crop intake rate may be obtained in a number of alternative ways, of which the attitude of the crop elevators is thought to be the most accurate. Other ways include measuring the torque of the auger or the crop cutter head. All ways of obtaining an indication of the crop intake rate are associated with components at the front of the harvester.

The grain loss on the other hand is assessed by counting the grains striking one or more grain detectors in or adjacent the outflows of straw and chaff from the harvester. Such detectors do not detect all lost grains but it has been found that a fairly constant proportion of the lost grains does strike the detectors, so that the number counted can be used to provide an indication of the actual grain loss occurring. The detectors are located at the rear of the harvester. The time taken for crop taken in at the front of the harvester to appear at its rear as straw and chaff, the transit time of the harvester, usually lies between 5 and 10 seconds, and in order to derive the relationship between the crop intake rate and the grain loss it is necessary to ascertain the transit time and allow for it. This is achieved by cross-correlating the crop intake rate with the grain loss. The delay time applied to the values of the crop intake rate giving the maximum correlation coefficient is the transit time, and a linear regression performed on the crop intake and corresponding grain loss data provides the relationship which is used to calculate the grain loss which will ( or is most likely to) result from the current crop intake rate. It has been found that a better correlation is obtained if both the crop intake rate and the grain loss are averaged over short periods, the same in each case, of between 1/2 and $2\frac{1}{2}$ seconds, for example. This averaging enables the effects of dispersion of the crop in passing through the harvester to be tolerated.

0077667

In one example of the invention, values of the averages are calculated every 1.6 seconds from samples taken at intervals of 0.1 second · · from indications of the crop intake rate and from totals reached by the grain loss counter or counters every 0.2 second; values of the correlation coefficient are calculated for a plurality of delay times differing by 0.2 second within the expected range, i.e. 5 to 10 seconds.

In order to assess the actual loss of grain which corresponds to the total registered by the or each grain loss counter, calibration is performed by collecting the straw and chaff and the grain ejected with it during one or more trial runs under a variety of conditions, measuring the actual amount of grain which would have been lost, and comparing that amount with the totals registered by the counter or counters during the runs. Once calibrated, it is assumed that the grain loss counter or counters maintain the relationship to the actual grain loss for a given crop unless there is a change in the position of the detectors.

The averaging, storing of the averages, execution of the cross-correlation, calculation of the current grain loss, comparison of this figure with the predetermined grain loss and the production of signals for controlling the ground speed of the harvester are all performed by electronic computing means, which is preferably a suitably

0077667

programmed microcomputer. The microcomputer may also effect the counting of the lost grains, receiving the pulse signals from the detector(s). On the other hand, some or all of the above functions may be performed by dedicated digital or analogue circuits.

The driver of the harvester may be provided with an adjustable control for setting the predetermined grain loss.

On the harvester the drive motor is coupled by a variable drive train to the threshing and associated components and by a further variable drive mechanism to the wheels. The motor may have a governor setting its speed to a value suitable for efficient threshing. The variable drive mechanism may include a hydrostatic drive to the wheels with an adjustable swash plate or eccentric for adjusting the stroke, or it may have a variable ratio pulley arrangement known as a variator. For manual operation of the harvester the variable drive mechanism is provided with a lever which is movable to adjust the ratio and thereby control the ground speed of the harvester. The control of the ground speed in accordance with the invention may conveniently be effected by a stepping electric motor driven by pulses from the electronic computing means and coupled by a mechanical linkage to the lever. With such an arrangement the position of the lever would act as a mechanical memory of the drive ratio, which would have the advantage that a changeover between automatic and manual control of the

0077667

ground speed could not result in a sudden jerk due to a discontinuity in the speed at which the harvester is to be driven.

In order that the invention may be fully understood and readily carried into effect it will now be described with reference to the accompanying drawings, of which:-

FIGURE 1 is a diagram of a combine harvester to which the invention is applied;

FIGURE 2 is a diagram of one embodiment of apparatus according to the present invention; and

FIGURE 3 is a diagram illustrating the calculations performed by the microcomputer of the apparatus of Figure 2.

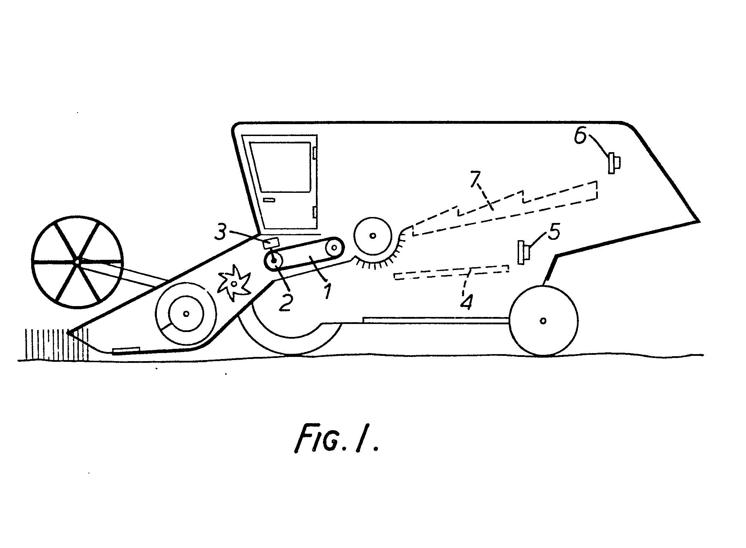

Referring now to Figure 1, the combine harvester shown will not be described in detail but the parts added to it for effecting the control of its speed will be described. The crop elevator is indicated by reference 1 and consists of a continuous band running over two rotating rollers which is pressed down on top of the crop entering the harvester at the front to feed the crop towards the threshing mechanism of the harvester. The front roller 2 of the crop elevator is provided with two height sensors 3, one at each end of the roller which are used to provide an electrical signal representing the average height of the roller 2 and therefore indicating the rate of intake of the crop. The chaff is blown out of the rear of the harvester over a sieve 4 and in or close to the path of the chaff being ejected is placed a grain detector 5. A second grain detector 6 is placed close to the outgoing windrow above the straw walkers 7. The grain detectors 5 and 6 have diaphragms connected to microphones which are arranged to produce an output pulse every time the diaphragms are struck by a grain.  It has been found possible to recognise the vibration produced by a grain striking the diaphragm and distinguish it from the vibration produced by straw and chaff striking the diaphragm.  The microphones included in the grain detectors 5 and 6 may have their output signals applied to suitably designed electrical filters to enhance the distinction between the electrical signals resulting from grain impacts relative to those produced by the impact of other particles on the detector diaphragms. Such detectors are available commercially from a number of suppliers.  The electrical signals from the height sensors 3 and the grain detectors 5 and 6 are applied to electrical apparatus including a microcomputer (not shown) which produces output signals for adjusting the variable ratio mechanism coupling the motor of the harvester to its driving wheels.

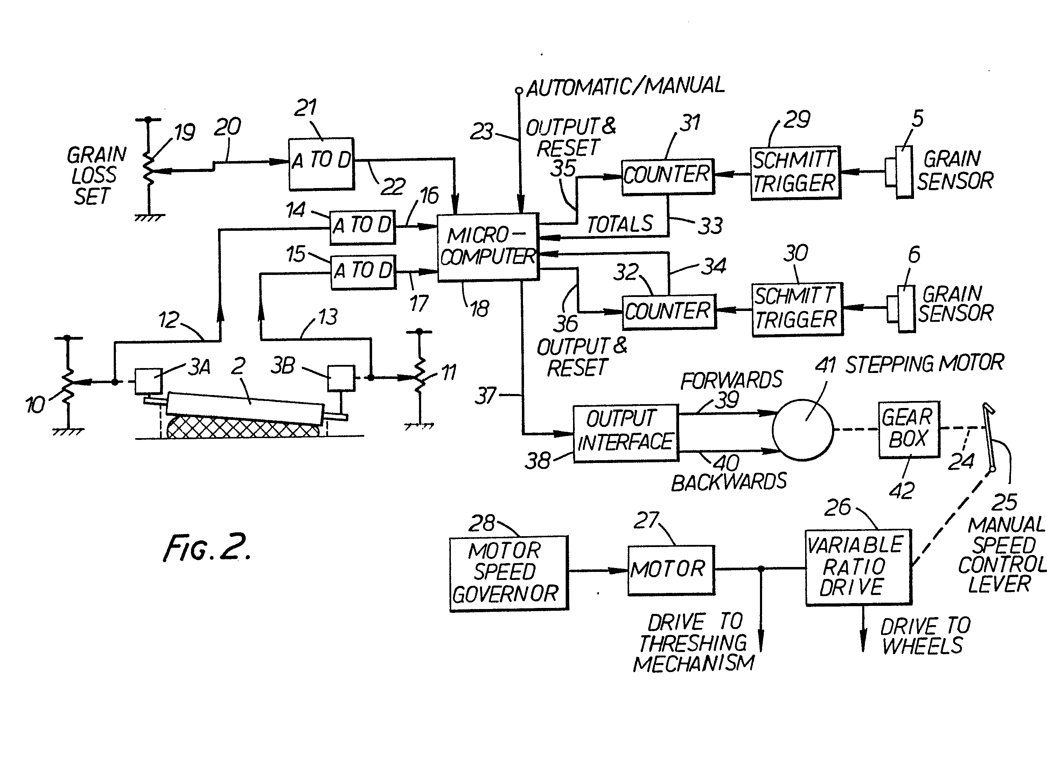

Figure 2 is a diagram of control apparatus in accordance with an example of the present invention.  The front roller 2 of the crop elevator is shown in Figure 2 as having height sensors 3A and 3B at it's ends. It will be apparent that the crop intake rate  will depend on the average height of the roller 2 and an indication of this average height is obtained by adding together the individual heights measured by the height sensors 3A and 3B.

**0077667**

The sensors 3A and 3B include potentiometers 10 and 11 respectively to which a constant voltage is applied so that from the wipers of the potentiometers are obtained d.c. voltages proportional to the height of the ends of the roller 2. These d.c. voltages are applied via conductors 12 and 13 respectively to analogue to digital converters 14 and 15 which produce respective digital outputs and 8-way parallel cables 16 and 17. The cables 16 and 17 are connected as inputs to a microcomputer 18 which is arranged to add together the values received from the converters 14 and 15 to produce a single value representing the crop intake rate. The converters 14 and 15 are arranged to produce digital outputs representing their voltage inputs every 0.1 second or possibly more frequently.

The driver of the combine harvester is provided with a manual control for setting a predetermined value of grain loss and this control is coupled to the wiper of a potentiometer 19 to which a constant voltage is applied so that on a conductor 20 a d.c. voltage representing the predetermined grain loss is set up. This voltage is converted to 8-bit digital form by a converter 21 and the digital signals are applied via an 8-way parallel cable 22 as an input to the microcomputer 18. The driver also has a control for switching in and out the automatic control of the ground speed of the harvester, which control applies a suitable voltage via a conductor 23 which is applied to the microcomputer to enable or disable its operation.

This control may also be used to release a linkage 24 by which the microcomputer 18 is coupled to a manual speed control lever 25 for setting the ratio of a variable ratio drive 26 passing the power output of the motor 27 of the harvester to the driven wheels. The motor 27 also drives the threshold mechanism of the harvester through a variable drive train not shown. The motor 27 has a governor 28 which is set so that the threshing mechanism is operated at an optimum speed for the particular crop.

The grain sensors 5 and 6 are also shown in Figure 2 and their output signals are applied via Schmitt triggers 29 and 30 to counters 31 and 32 respectively. The totals recorded in the counters 31 and 32 are applied to the microcomputer 18 via 8-way parallel cables 33 and 34 respectively. The microcomputer 18 applies signals via conductors 35 and 36 respectively to the counters 31 and 32 to cause them to output their totals and to reset them. Outputting of the totals and the resetting of the counters is carried out every 0.2 second or less.

The microcomputer 18 receives the signals representing the crop intake rate and the grain loss, averages the values over a period of time between 1/2 and $2\frac{1}{2}$ seconds (1.6 seconds in present embodiment), and performs a cross-correlation between the average values to derive a relationship between the crop intake rate and grain loss. On the basis of this relationship, it calculates the current grain loss corresponding to the current crop intake rate. It then compares the current grain loss with the set value of the grain loss, and on the basis of this comparison determines whether the harvester should have a higher or lower ground speed or whether its ground speed is correct. It produces an output signal on a conductor 37 which is applied to an output interface 38. The output interface has two output conductors 39 and 40 on which pulses appear in response to the output from the microcomputer 18. A pulse appears on the conductor 39 if the ground speed is to be increased and a pulse appears on the conductor 40 if the ground speed is to be decreased. If no change is to be made to the ground speed the interface 38 produces no output pulses. The conductors 39 and 40 are connected to a stepping motor 41 so that a pulse on the conductor 39 causes the stepping motor to step forwards and a pulse on the conductor 40 causes it to step backwards by a predetermined amount. The shaft of the stepping motor 41 is coupled to a gear box 42 and the linkage 24 to the manual speed control lever 25.

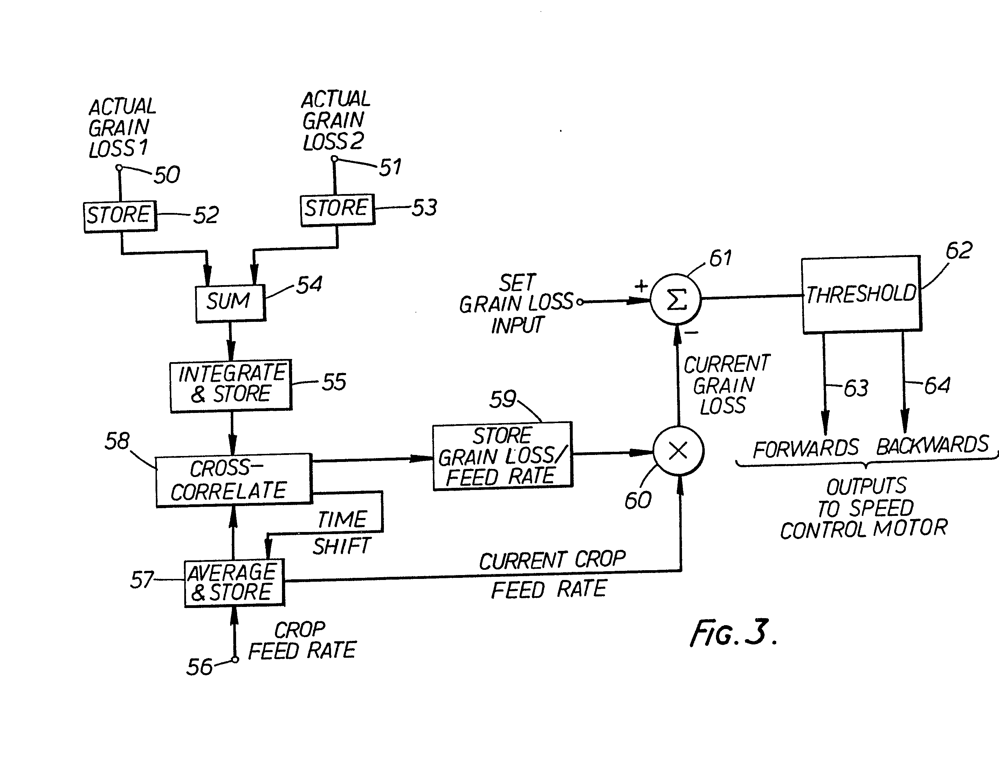

Figure 3 is a diagram of the calculations performed by the microcomputer 18, and it will be clear that the operations shown in Figure 3 are defined by a program in the microcomputer although, if desired, hardware dedicated to the different operations could be used as an alternative. The construction of the microcomputer 18 is conventional and it could be any of a number of commercially available microcomputers, provided that the storage capacity of the machine and its speed of operation are adequate to execute the program. As shown in Figure 3, the grain loss signals from the sensors 5 and 6 are entered separately at 50 and 51 and are stored at 52 and 53 respectively. The stored values are added together by operation 54 and the sum is combined with previously stored values and stored as integrated values by operation 55. In one example of the invention, the grain loss totals are taken every fifth of a second and these are the values stored by the operations 52 and 53. The succession of values of total grain loss are integrated together to produce a succession of integrated values of grain loss over 1.6 seconds. The integrated values are produced for every 0.2 of a second so that the periods of time overlap. The number of integrated values stored lies between 18 and 22 and corresponds to a time period extending about 2 seconds each side of the expected transit time. The values of the crop feed rate enter at 56 and are averaged and stored by the operation 57. The crop feed rate is sampled every 0.1 second and the total feed for 1.6 seconds is calculated by the microcomputer 18. These totals are worked out for consecutive periods for each 1.6 seconds and 25 values of the average are stored. The cross-correlation represented by the block 58 is performed by multiplying together corresponding stored values of the integrated grain loss and the averaged crop feed rate with a number of different values of time shift lying between 5 and 10 seconds (these representing possible values of the transit time of the harvester) and the products are summed to produce the cross-correlation coefficients. The maximum value of the cross-correlation coefficient is ascertained by the microcomputer 18, which value indicates the effective transit time of the machine and on the basis of this transit time the relationship between the crop feed rate and the grain loss separated by the transit time is determined using a linear regression analysis. The linear regression analysis gives an equation of the form

Crop input = A + B x grain loss where A and B are constants, i.e. a value "A" of crop input is possible before any grain loss is recorded. There will be some variation in the relationship for different samples, but an approximate linear equation can be ascertained and this is stored by operation 59. The current crop feed rate is fed into the equation in operation 60 to produce a value for the current grain loss. Operation 61 compares the current grain loss with the set grain loss and produces an output indicating the difference between the current grain loss and the set grain loss. This difference is compared with threshold values in operation 62 to cause the generation of an output 63 or 64, depending upon whether the current grain loss is smaller than or greater than the set grain loss, and therefore whether the ground speed of the harvester can be increased or should be decreased.  If the current grain loss is substantially equal to the set grain loss, then no output is produced and the harvester is permitted to continue at its current speed.

In the simplest form of the calculation the relationship between the grain loss and the crop intake rate is assumed to be linear, but the calculation may be arranged to take into account a more complex, non-linear relationship the exact form of which can be derived from the many values of crop intake rate and grain loss applied to the microcomputer.

It is possible that the cross-correlation between the crop intake rate and the grain loss is particularly poor in some instances, and the program of the microcomputer may be arranged to ignore any information derived from a cross-correlation which has a coefficient below a predetermined minimum value.  Similarly a spurious false cross-correlation may also occur, which could be detected by the marked difference in transit time, and this criterion could be used to reject false data obtained from such a correlation.

Although the invention has been described with reference to a specific example, it will be appreciated that many modifications may be made to the described example. For example, the crop intake rate could be derived from the driving torque for the auger or cutting head, other forms of grain loss sensor could be used, and different methods could be used to adjust the ground speed of the harvester.

CLAIMS

1.        Control apparatus for a combine harvester including means for producing an assessment of the crop intake rate, means for producing an assessment of the grain loss, means for deriving a relationship between grain loss and the crop intake rate, and means for controlling the ground speed of the harvester in response to the crop intake rate taking into consideration the derived relationship so that a predetermined grain loss is maintained.

2.        Apparatus according to claim 1 in which the assessment of both the grain loss and the crop intake rate are averaged over a short period of time.

3.        Apparatus according to claim 2 wherein the short period of time lies between $1/2$ and $2\frac{1}{2}$ seconds.

4.        Apparatus according to claim 3, wherein the short period of time is 1.6 seconds, the instantaneous value of the crop feed rate is measured or assessed every 0.1 second and the value of the grain loss in each 0.2 second period is measured or assessed .

5.        Apparatus according to any preceding claim wherein the relationship between the grain loss and the crop intake rate is derived by cross-correlating the crop intake rate with the grain loss for a range of values of a transit time for the crop through the harvester, identifying the transit time giving the maximum correlation coefficient, and producing the relationship from the values of crop intake rate and grain loss providing the maximum correlation coefficient.

6. Apparatus according to claim 5 including means for deriving a linear regression relating the grain loss and the crop intake rate to calculate an anticipated grain loss from a current crop intake rate, comparing the anticipated grain loss with the predetermined grain loss, and producing a control signal for controlling the ground speed of the harvester.

7. Apparatus according to claim 5 or 6 wherein the means for deriving a relationship between the grain loss and the crop intake rate, and the means responsive to the derived relationship together include an electronic computing apparatus.

8. Apparatus according to any preceding claim wherein the means for controlling the ground speed of the harvester includes an electric motor and a mechanical linkage enabling the motor to be coupled to a manually operable control for setting the ground speed of the harvester, the arrangement being such that the setting of the control by the motor can be manually overriden.

9. Apparatus according to claim 8 wherein the motor is a stepping motor to which pulses are selectively applied for causing forward or backward rotation to produce a steady rate of change of ground speed of the harvester to that required to maintain the predetermined grain loss.

10. Apparatus according to any preceding claim wherein the means for producing an assessment of the crop intake rate includes means responsive to the attitude of the crop elevator.

11. Apparatus according to claim 10 wherein the means responsive to the attitude of the crop elevator includes potentiometers respectively coupled to the elevator at its sides to respond to the heights of the sides of the elevator relative to datum positions, the average of the values derived from the sides being used as an indication of the crop intake rate.

12. Apparatus according to any preceding claim wherein the means for producing an assessment of the grain loss includes one or more grain detectors responsive to the impact of grains thereon in the outgoing flows of straw and chaff and means for counting the grain impacts.

13. Control apparatus for a combine harvester substantially as described herein with reference to the accompanying drawings.

14. A combine harvester including a control apparatus according to any preceding claim.

FIG. 1.

FIG. 2.

2/3

0077667

Fig. 3.

## EUROPEAN SEARCH REPORT

| | DOCUMENTS CONSIDERED TO BE RELEVANT | | EP 82305518.1 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| X | DE - B2 - 2 106 970 (MASCHINEN-FABRIK FAHR AG) Claim 1; page 4, paragraph 5 * & GB-A-1 378 715 | 1,2 | A 01 D 41/12 A 01 D 41/02 |
| X | US - A - 4 130 980 (FARDAL) * Abstract * | 1 | |
| A | GB - A - 1 141 961 (WSESOJUSNY NAUTSCHNOISSLECLOWATELSKIJ INSTITUT) * Claim 1 * | 1 | |
| A | US - A - 4 296 409 (WHITAKER) * Totality * | 1 | TECHNICAL FIELDS SEARCHED (Int. Cl. ³) |
| A | GB - A - 1 450 956 (MASCHINEN-FABRIK FAHR AG) | | A 01 D 41/00 |
| A | GB - A - 2 057 837 (MEM-MUSZAKI INTEZET GODOLLO) | | |

The present search report has been drawn up for all claims

| Place of search | Date of completion of the search | Examiner |
|---|---|---|
| VIENNA | 16-12-1982 | LANGER |